# EUROPÄISCHE PATENTSCHRIFT

(11) **EP 0 707 997 B1**
(45) Veröffentlichungstag und Bekanntmachung des Hinweises auf die Patenterteilung: **15.04.1998**
(21) Anmeldenummer: 94119807.9
(22) Anmeldetag: 15.12.1994
(51) Int. Cl.: B60K 26/02, G05G 1/14

(54) **Gaspedaleinrichtung für ein Kraftfahrzeug**
Motor vehicle accelerator pedal arrangement
Disposition d'une pédale d'accélérateur pour automobiles

(30) Priorität: 21.10.1994 DE 4437659
(43) Veröffentlichungstag der Anmeldung: 24.04.1996
(73) Patentinhaber: Dr.Ing.h.c. F. Porsche Aktiengesellschaft, 70435 Stuttgart (DE)
(72) Erfinder: Baumann, Hans-Uwe, D-70437 Stuttgart 40 (DE); Mertens, Carsten-Joerg, D-71134 Aidlingen (DE)

(56) Entgegenhaltungen:
- EP-A- 0 659 606
- GB-A- 2 017 604
- US-A- 4 182 198

## Beschreibung

Die Erfindung betrifft eine Gaspedaleinrichtung nach dem Oberbegriff des Anspruchs 1.

In der EP-A-659606 ist eine Gaspedaleinrichtung mit einer Führung eines Endes des Gaszuges auf einer Umlenkscheibe beschrieben. Eine entsprechend der Bewegung der Pedalplatte auf den Gaszug wirkende Bewegung erfolgt über eine zwischengeschaltete Zugstange Diese ist einerseits in einem Umlenkhebel und andererseits in der Umlenkscheibe eingehängt, in der auch das Ende des Gaszuges gehalten wird. Mit dem Umlenkhebel ist eine Druckstange der Pedalplatte verbunden, so daß bei Druck auf die Pedalplatte eine Gaszugbewegung durchgeführt werden kann.

Aufgabe der Erfindung ist es, eine Gaspedaleinrichtung mit einem Gaszug zu schaffen, der in einfacher Weise mit einer Stelleinrichtung in der Einrichtung montierbar ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der Gaszug unmittelbar mit dem Umlenkhebel verbunden ist und eine Zugstange zwischen dem Umlenkhebel und der Umlenkscheibe entfallen kann. Hierdurch wird eine direkte Verbindung zwischen dem Umlenkhebel und dem Gaszug geschaffen, was eine Vereinfachung der Montage bewirkt und Toleranzen vermindert.

Zur Führung des Gaszuges ist im Pedalfuß eine als Segment ausgebildete Umlenkscheibe gelagert, die entsprechend den Bewegungen der Pedalplatte verschwenkbar ist. Zur Führung des Gaszuges auf der Umlenkscheibe ist diese umfangsseitig mit Führungsmitteln in Form von radial vorragenden Stegen versehen, die zwischen sich den Gaszug aufnehmen.

Diese Führungsmittel sind so angeordnet, daß sowohl bei Ruhestellung als auch bei maximaler Betriebsstellung der Seilzug sicher auf der Umlenkscheibe ausgangs- sowie eingangsseitig geführt ist.

Ein Ausführungsbeispiel der Erfindung ist in der Zeichnung dargestellt und wird im folgenden näher beschrieben.
Es zeigen
- Fig 1: eine aufgeschnittene Darstellung einer Gaspedaleinrichtung mit einer Pedalplatte in Ruhestellung, und
- Fig. 2: eine aufgeschnittene Darstellung der Gaspedaleinrichtung mit einer Pedalplatte in einer maximalen Betriebsstellung.

Die Gaspedaleinrichtung 1 umfaßt im wesentlichen eine aus zwei Halbschalen - wovon nur die eine Halbschale 3 dargestellt ist - zu einem geschlossenen länglichen Gehäuse zusammengesetzte Pedalhalterung. Die Halbschalen weisen zur Aufnahme von einem Umlenkhebel 13 und einer als Segment ausgebildeten Umlenkscheibe 40 Lagerungen 5, 6 auf und sind zum Aufeinanderstecken mit Positionierbolzen an der Halbschale 3 versehen, die in entsprechende Hülsen der anderen Halbschale einsteckbar sind. Eine Verbindung der beiden Halbschalen erfolgt über Schraubmittel. Zum Festsetzen des Gehäuses an einer Aufbauwand bzw. zum Verbinden mit einem Fahrzeugboden dienen Klipselemente mit Rasthaken.

Der Umlenkhebel 13 ist mit einer Druckstange 18 einer am Gehäuse gehaltenen Pedalplatte 21 verbunden und weist einen eingehängten Gaszug 17 auf. Dieser wird über eine am Fuß der Pedalplatte 21 angeordnete Umlenkscheibe 40 umgelenkt.

Der Umlenkhebel 13 ist zum Einhängen eines endseitigen Zapfens 47 des Gaszuges 17 mit einer Aufnahme 46 versehen. An der Umlenkscheibe 40 sind auf der umfangsseitigen Führungsbahn Führungsmittel 41, bestehend aus radial vorstehenden Nasen 42 und 43 angeformt, die den Gaszug 17 zwischen sich haltend aufnehmen.

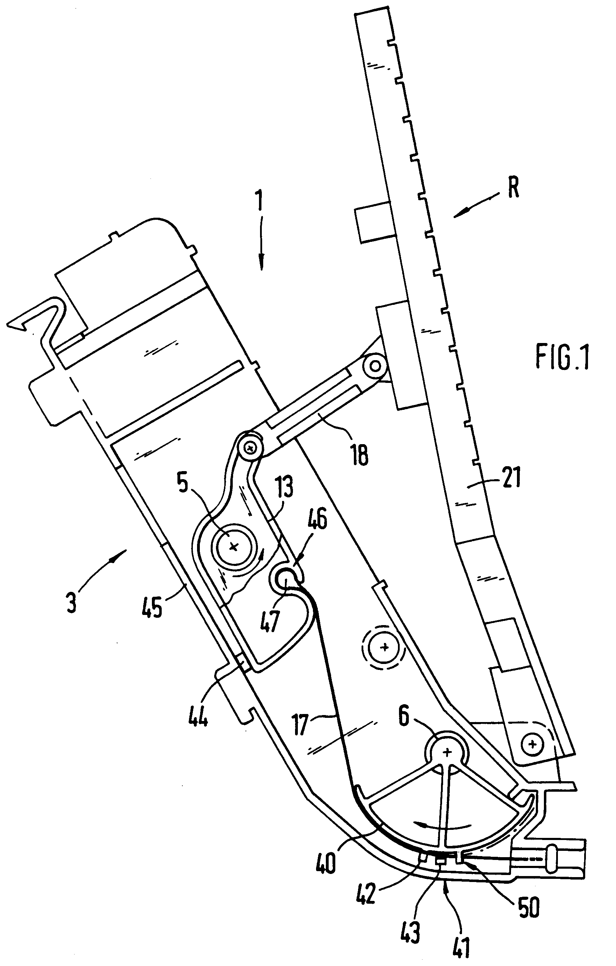

Wie Fig. 1 näher zeigt, ist der Gaszug 17 bei Ruhestellung R der Pedalplatte 21 umfangsseitig über etwa einen Viertelkreis des Segments der Umlenkscheibe 40 gehalten, wobei ausgangsseitig die Führung 50 und die Führungsmittel 41 den Gaszug in Lage halten. Über einen Anschlag 44 ist der Umlenkhebel 13 bei Ruhestellung R am Gehäuse abgestützt.

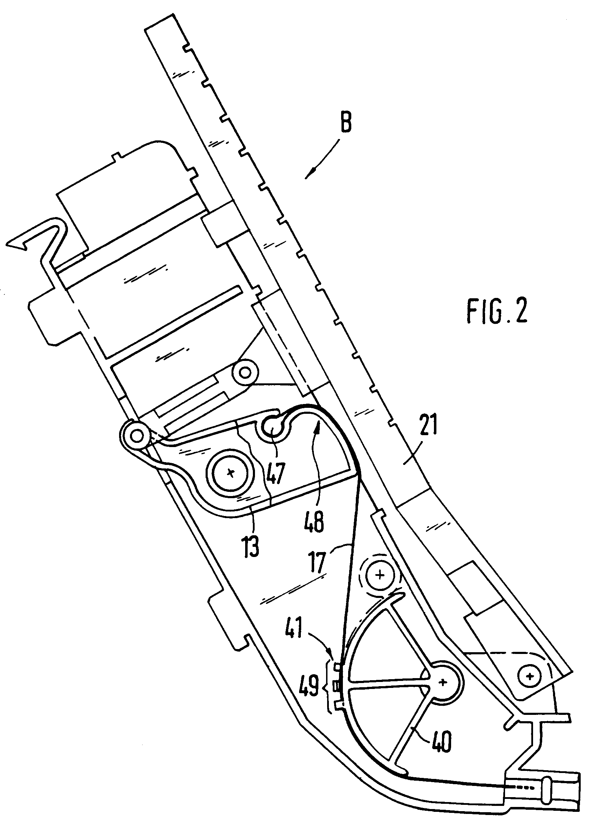

In Fig.2 ist eine Betriebsstellung B der Pedalplatte 21 gezeigt, in der der Gaszug 17 eingangsseitig im Bereich 49, bei verdrehter Umlenkscheibe 40, wiederum geführt und in Lage gehalten ist.

Der Umlenkhebel 13 weist eine bogenförmige Führungsfläche 48 auf, an die sich der Gaszug 17 bei Veränderung der Pedalplatte 21 von der Ruhestellung R in die Betriebsstellung B anlegt.

## Patentansprüche

1. Gaspedaleinrichtung für ein Kraftfahrzeug mit einer an einer Pedalhalterung in Form eines Gehäuses schwenkbar gelagerten Pedalplatte und einer mit der Pedalplatte verbundenen Stelleinrichtung, wobei die Pedalhalterung aus einem zwei Halbschalen umfassenden länglichen Gehäuse besteht, in dem an innenseitig angeformten Lagerstellen Bauteile der Stelleinrichtung gehalten sind und außenseitig der Halbschalen querverlaufende Rasthakenleisten und an einer dem Fahrzeugaufbau zugerichteten Unterfläche der Halbschalen angeformte gemeinsame Zentrierdome zur Befestigung und Lagefixierung vorgesehen sind, daß ein Gaszug (17) mit einem Umlenkhebel (13) eingehängt verbunden ist und der Gaszug (17) im Fuß der Pedalplatte (21) auf einer einen Kreisbogenabschnitt aufweisenden verschwenkbaren Umlenkscheibe (40) geführt ist, **dadurch gekennzeichnet**, daß der Umlenkhebel (13) eine Aufnahme (46) zum Einhängen eines am Ende des Gaszuges (17) befestigten Zapfens (47) aufweist und der Gaszug (17) bei Verschwenkung der Pedalplatte (21) von der Ruhestellung (R) in die Betriebsstellung (B) auf einer bogenförmig ausgerundeten Führungsfläche (48) des Umlenkhebels (13) anliegt.

2. Einrichtung nach Anspruch 1, **dadurch gekennzeichnet**, daß der Umlenkhebel (13) in seiner Ruhestellung (R) über einen Anschlag (44) an einer Wandung (45) des Pedalgehäuses abgestützt ist.

3. Einrichtung nach den Ansprüchen 1 oder 2, **dadurch gekennzeichnet**, daß die Umlenkscheibe (40) am Umfang Führungsmittel (41) für den Gaszug (17) aufweist, die aus radial vorstehenden Nasen (42, 43) bestehen, die zwischen sich den Gaszug (17) aufnehmen.

4. Einrichtung nach den Ansprüchen 1, 2 oder 3, **dadurch gekennzeichnet**, daß der Gaszug (17) in einer Ruhestellung (R) ausgangsseitig in einer Führung (50) und über die Führungsmittel (41) auf der Umlenkscheibe (40) und in der Betriebsstellung (B) eingangsseitig über die Führungsmittel (41) auf der verschwenkten Umlenkscheibe (40) gehalten ist.

## Claims

1. An accelerator-pedal device for a motor vehicle with a pedal plate mounted pivotably on a pedal mounting in the form of a housing and with an adjustment device connected to the pedal plate, the pedal mounting comprising an elongate housing which comprises two half shells and in which components of the adjustment device are held on bearing points formed integrally on the inside, and transversely extending detent strips are provided on the outside of the half shells and integrally moulded common centring bulges are provided on an underside of the half shells facing the vehicle body for strengthening and for fixing the position, a throttle-control cable (17) is connected in a suspended manner to a deflecting lever (13) and the throttle-control cable (17) is guided at the base of the pedal plate (21) on a pivotable deflecting disc (40) having an arcuate portion, **characterized in that** the deflecting lever (13) has a receiving means (46) for suspending a pin (47) secured to the end of the throttle-control cable (17), and when the pedal plate (21) is pivoted from the rest position (**R**) into the operating position (**B**) the throttle-control cable (17) rests against a guide face (48) - rounded in the shape of a curve - of the deflecting lever (13).

2. A device according to Claim 1, **characterized in that** the deflecting lever (13) is supported in its rest position (**R**) by way of a stop (44) on a wall (45) of the pedal housing.

3. A device according to Claim 1 or 2, **characterized in that** the deflecting disc (40) is provided on the periphery thereof with guide means (41) for the throttle-control cable (17), which comprise radially projecting stubs (42, 43) which receive the throttle-control cable (17) therebetween.

4. A device according to Claims 1, 2 or 3, **characterized in that** the throttle-control cable (17) is held on the outside in a guide (50) and by way of the guide means (41) on the deflecting disc (40) in a rest position (**R**) and on the inside by way of the guide means (41) on the pivoted deflecting disc (40) in the operating position (**B**).

## Revendications

1. Disposition d'une pédale d'accélérateur pour un véhicule automobile, avec une plaque de pédale, montée pivotante sur un support de pédale se présentant sous la forme d'un boîtier et un dispositif de réglage relié à la plaque de pédale, le support de pédale étant constitué d'un boîtier allongé, enchâssant deux demi-coquilles, boîtier dans lequel sont maintenus des composants du dispositif de réglage, sur des points de tourillonnement formés d'un seul tenant côté intérieur, et des baguettes formant crochet d'accrochage s'étendant transversalement du côté extérieur des demi-coquilles et des mandrins de centrage communs, formés d'un seul tenant sur une surface inférieure, tournée vers la carrosserie du véhicule, des demi-coquilles, étant prévus pour assurer la fixation et le positionnement à l'état fixé, en ce qu'un câble d'accélérateur (17) est relié, accroché à un levier de renvoi (13) et le câble d'accélération (17) étant guidé au pied de la plaque de pédale (21) sur un disque de renvoi (40), pouvant pivoter et présentant un tronçon en arc de cercle, caractérisée en ce que le levier de renvoi (13) présente un logement (46) destiné à accrocher un tourillon (47) fixé à l'extrémité du câble d'accélérateur (17), et le câble d'accélérateur (17) appuyant, lors du pivotement de la plaque de pédale (21), de la position de repos (R) à la position de fonctionnement (B), sur une surface de guidage (48) arrondie en forme d'arc et appartenant au levier de renvoi (13).

2. Disposition selon la revendication 1, caractérisée en ce que le levier de renvoi (13) est soutenu dans sa position de repos (R), par l'intermédiaire d'une butée (44), sur une paroi (45) du boîtier de pédale.

3. Disposition selon les revendications 1 ou 2, caractérisée en ce que le disque de renvoi (40) présente sur la périphérie des moyens de guidage (41) destinés au câble d'accélérateur (17), moyens constitués d'ergots (42, 43) faisant saillie radialement et recevant entre eux le câble d'accélérateur (17).

4. Disposition selon la revendication 1, 2 ou 3, caractérisée en ce que le câble d'accélérateur (17) est maintenu dans une position de repos (R), côté sortie, dans un guidage (50) et par l'intermédiaire des moyens de guidage (41) prévus sur le disque de renvoi (40) et, dans la position de fonctionnement (B), côté entrée, par l'intermédiaire des moyens de guidage (41) prévus sur le disque de renvoi (40) ayant été pivoté.
